# EUROPÄISCHE PATENTSCHRIFT

(11) **EP 1 955 804 B1**
(45) Veröffentlichungstag und Bekanntmachung des Hinweises auf die Patenterteilung: **23.06.2010**
(21) Anmeldenummer: 07008561.8
(22) Anmeldetag: 26.04.2007
(51) Int. Cl.: B23K 9/09, B23K 9/29

(54) **Verfahren zum Auftragsschweißen und/oder Auftragslöten**
Method for built-up welding and/or build-up brazing
Méthode de soudage par rechargement

(30) Priorität: 06.02.2007 DE 102007005936
(43) Veröffentlichungstag der Anmeldung: 13.08.2008
(73) Patentinhaber: PanGas, 6252 Dagmersellen (CH)
(72) Erfinder: Wilhelm, Gerald, 86551 Aichach (DE)
(74) Vertreter: Gellner, Bernd

(56) Entgegenhaltungen:
- EP-A- 1 707 296
- DE-A1- 10 033 387
- JP-A- 56 109 171
- US-A1- 2006 151 440

## Beschreibung

Die Erfindung betrifft ein Verfahren zum Auftragsschweißen und/oder Auftragslöten mit einem Lichtbogen mit abschmelzender Elektrode, wobei ein Lichtbogen zwischen Elektrode und Werkstück brennt, wobei der Lichtbogen als Impulslichtbogen mit einer Stromkennlinie, die eine periodische Wiederholung mit zumindest einer Grund- und Hochstromphase aufweist, betrieben wird.

Zum Lichtbogenschweißen unter Schutzgas werden verschiedene Schweißverfahren eingesetzt. Neben dem Verfahren mit abschmelzender Elektrode, zu welcher das Metall-Aktiv-Gas- und das Metall-lnert-Gas-Schweißen zählen, gibt es das mit nicht abschmelzender Elektrode arbeitende Wolfram-lnert-Gas-Schweißen und das Plasmaschweißen. Zu Steigerung der Produktivität werden in den letzten Jahren zunehmend Hochleistungsschweißverfahren eingesetzt. Hochleistungsschweißverfahren, welche in der Regel mit abschmelzenden Elektroden arbeiten, zeichnen sich im Vergleich zum konventionellen Metall-Schutzgas-Schweißen durch höhere Abschmelzleistungen der Elektrode aus. Die Abschmelzleistung ist proportional zum Drahtdurchmesser und zur Drahtvorschubgeschwindigkeit. Die höheren Abschmelzleistungen lassen sich in höhere Schweißgeschwindigkeiten oder/und in höhere Schweißnahtvolumina umsetzen - im Vergleich zum konventionellen Schweißen. Grundlagen des Metall-Schutzgas-Hochleistungsschweißens sind im Merkblatt des deutschen Verbandes für Schweißen und verwandte Verfahren e.V., DSV 0909-1 (September 2000) und DSV 0909-2 (Juni 2003) näher beschrieben.

Neben dem Metall-Schutzgas-Schweißen wird seit einigen Jahren auch das Metall-Schutzgas-Löten (MIG und MAG-Löten) praktiziert. Hier wird eine Drahtelektrode mit niedrigem Schmelzpunkt verwendet. Das Ziel ist eine Lötverbindung mit möglichst keiner oder nur geringer Aufschmelzung des Grundwerkstoffes. Neueste Entwicklungen versuchen auch eine Kombination beider Prozesse, z.B. Verbinden von Aluminiumwerkstoffen mit beschichteten Stahlblechen, wobei zur einen Werkstoffseite hin ein Lötprozess vorherrscht, und zur anderen ein Schweißprozess.

Beim Lichtbogenschweißen und beim Lichtbogenlöten mit abschmelzender Elektrode brennt ein Lichtbogen zwischen abschmelzender Elektrode und Werkstück. Ausser beim Schweißen von dünnen Blechen (bis ca. 2mm) oder Wurzellagen, wird ein kurzschlussfreier Materialübergang eingestellt. Der Materialübergang erfolgt durch Ablösung eines Tropfens von der Elektrode. Die Tropfenablösung geschieht unter Einwirkung des Pincheffekts, der ein Einschnüren des Tropfens bewirkt und damit die Tropfenablösung unterstützt und für Prozessstabilität sorgt. Der Pincheffekt unterstützt die Tropfenablösung nur bei positiver Polung der Drahtelektrode. Deshalb wird die Elektrode positiv gepolt. Um den Pincheffekt auch bei Drahtvorschubgeschwindigkeiten zu nutzen, bei denen sich normalerweise ein nicht mit regelmäßigen Kurzschlüssen behafteter Lichtbogen (ein sogenannter Übergangslichtbogen) einstellt, wird der Impulslichtbogen gewählt. Beim Impulslichtbogen wird ein sich periodisch wiederholender Stromverlauf eingestellt, welcher zumindest eine Grund- und eine Hochstromstromphase aufweist. Beim Impulslichtbogen bewirkt der Pincheffekt besonders in der Hochstromphase die Tröpfcheneinschnürung und der Prozess verläuft dadurch kurzschlussfrei. Ein solches Lichtbogenschweißen ist aus dem Dokument DE 100 333 87 bekannt. Der Bogen wird bei Abschmelzleistungen bis in den Bereich von 5 kg/h verwendet. Höhere Abschmelzleistungen werden unter Verwendung von Lichtbogentypen, wie Sprühlichtbogen oder rotierenden Lichtbogen, realisiert. Diese Lichtbogenarten bedürfen, um kurzschlussfrei zu verlaufen, keiner zusätzlichen Impulsüberlagerung, da die mit den hohen Abschmelzleistungen einhergehenden hohen Schweißstromstärken einen derart ausgeprägten Pincheffekt hervorrufen, der seinerseits die Tropfenablösung maßgeblich herbeiführt.

Beim Auftragsschweißen und beim Auftragslöten wird Material auf ein Werkstück aufgebracht. Das Verfahren wird beispielsweise benützt, um verschlissene Bauteile zu reparieren, um verschleißfeste oder/und korrosionsbeständige Rand- oder Oberflächenschichten aufzubringen und um zu Plattieren und Panzern. Das Material wird durch Schweißen aufgebracht, wobei eine oder mehrere Lagen aufgetragen werden. Beim Auftragsschweißen wird eine geringe Aufmischung gewünscht, damit eine Entstehung von intermetallischen Phasen so weit wie möglich unterbunden wird. Die üblichen Schweißverfahren führen jedoch insbesondere bei hohen Abschmelzleistungen zu einer unerwünscht hohen Aufmischung. Ebenso können hohe Abschmelzleistungen auch beim Metall-Schutzgas-Löten zu einer unerwünschten Aufmischung führen.

Der Erfindung liegt deshalb die Aufgabe zugrunde, ein Verfahren zum Auftragsschweißen und/oder Auftragslöten mit Impulslichtbogen anzugeben, das mit einer geringen Aufmischung verbunden ist, wobei eine geringe Aufmischung insbesondere auch bei hohen Abschmelzleistungen möglich sein soll. Weiterhin soll die dem Schweißprozess und/oder Lötprozess zugeführte Energie effektiv genutzt und die Überhitzung des von der Elektrode sich lösenden Tropfens möglichst gering gehalten werden.

Die Aufgabe wird erfindungsgemäß dadurch gelöst, dass die Elektrode negativ gepolt wird, wobei in der Grundstromphase ein diffuser Lichtbogen zwischen dem Abschlussbereich der Elektrode und dem Werkstück brennt und in der Hochstromphase ein Lichtbogen mit hellem Kern und Halo zwischen Elektrode und Werkstück brennt, wobei der helle Kern des Lichtbogens am Ende der Elektrode ansetzt und der Halo des Lichtbogens den Abschlussbereich der Elektrode umschließt. Durch die negative Polung der Elektrode wird eine geringe Aufmischung erreicht. Dies ist darauf zurückzuführen, dass bei negativer Polung der Elektrode der Lichtbogen an der Elektrode hochklettert und dadurch der Wärmeübergang auf einer größeren Fläche stattfindet. Dadurch reduziert sich die Überhitzung der Elektrode im Vergleich zum Schweißprozess mit positiver Polung. Diese Überhitzung wird bewirkt durch einen hellen Lichtbogenkern, der direkt am Elektrodenende ansetzt.

Zur weiteren Reduktion der Überhitzung wird die Impulslichtbogentechnik mit negativer Polung so verwendet, dass dabei in der Grundstromphase ein diffuser Lichtbogen zwischen dem Abschlussbereich der Elektrode und dem Werkstück brennt. Der diffuse Lichtbogen entsteht bei negativer Polung der Elektrode und durch entsprechend Wahl des Grundstroms. Aufgrund der negativen Polung der Elektrode und des niedrigen Grundstroms, setzt der Lichtbogen nicht am Ende der Elektrode an, sondern der Lichtbogenansatz umfasst ausschließlich den Abschlussbereich der Elektrode, also einen weiten Bereich am Ende der Elektrode. Damit umfasst der Lichtbogen einen großen Teil der freien Drahtlänge der Elektrode. Der Grundstrom wird dabei so niedrig gewählt, dass ausschließlich der diffuse Lichtbogen brennt und nicht ein Lichtbogen mit hellem Kern und einem Halo, wie er sich bei höheren Werten ergibt und wie er von negativer Elektrodenpolung mit Gleichstrom her bekannt ist. Die in der Grundstromphase zugeführte Energie führt zwar zu dem diffus brennenden Lichtbogen, jedoch ist die Energie zu gering, um einen effektiven Materialübergang durch Abschmelzen der Elektrode herbeizuführen. Dazu wird die in der Hochstromphase zugeführte Energie benötigt, weshalb ja das erfindungsgemäße Verfahren mit der lmpulslichtbogentechnik arbeitet.

Dies bedeutet also, dass die Einstellungen in der Grundstromphase derartig gewählt werden, dass in der Grundstromphase ausschließlich der diffuse Lichtbogen brennt. In dem diffusen Lichtbogen wird der gesamte Abschlussbereich der Elektrode erwärmt und auch erweicht. Aufgrund der großflächigen Erwärmung der Elektrode wird eine Überhitzung der Elektrode wirkungsvoll unterbunden und das Abschmelzen der Elektrode unterstützt. Somit wird die dem Schweißprozess zugeführte Energie sehr effektiv zum Abschmelzen der Elektrode genutzt. Das erfindungsgemäße Verfahren führt weiterhin zur Reduktion der spezifischen Tropfenenthalpie und zu einer geringeren mittleren Tropfentemperatur. Für den Grundwerkstoff bedeutet dies, dass diesem nur wenig Energie zugeführt wird. Folglich wird auch wenig Grundwerkstoff aufgeschmolzen, wodurch die Aufmischung verringert wird.

In vorteilhafter Ausgestaltung der Erfindung weist der Abschlussbereich der Elektrode eine Länge auf, die das zwei- bis siebenfache, vorzugsweise das drei- bis fünffache des Durchmessers der Elektrode beträgt. Brennt der diffuse Lichtbogen diese Länge die Elektrode hinauf, wird der Elektrode während der Grundstromphase im richtigen Maße erwärmt. So dass sich die Vorteile der Erfindung besonders ausgeprägt zeigen.

In der Hochstromphase brennt ein Lichtbogen mit hellem Kern und Halo zwischen Elektrode und Werkstück, wobei der helle Kern des Lichtbogens am Ende der Elektrode ansetzt und der Halo des Lichtbogens den Abschlussbereich der Elektrode umschließt. Der Halo ist somit der Teil des Lichtbogens, welcher deutlich schwächer als der helle Kern brennt und den hellen Kern wie ein Lichthof umgibt. Der Lichtbogen muss in der Hochstromphase stabil brennen. Die hohe Energiezufuhr in der Hochstromphase führt dazu, dass in der Hochstromphase im Gegensatz zur Grundstromphase dieser Lichtbogen mit hellem Kern und Halo brennt. Die Energie in dem hellen Kern ist dabei so hoch, dass am Elektrodenende durchaus eine Überhitzung stattfindet. In der Hochstromphase muss jedoch ausreichend Energie zugeführt werden, damit ein effektiver Materialübergang von der abschmelzenden Elektrode zum Werkstück stattfindet.

Im Vergleich zum Schweißen oder Löten mit nichtgepulstem Strom und negativer Polarität der Elektrode, wird die Überhitzung reduziert, da der heiße Lichtbogenkern nicht mehr über die gesamte Prozessdauer, sondern nur noch in der Grundstromphasen brennt. Daher wird die zugeführte Energie sehr effektiv zum Abschmelzen der Elektrode genutzt und dem Grundwerkstoff sehr wenig Energie zugeführt wird. Auch im Vergleich zum Schweißen oder Löten mit positiver Polung und Impulslichtbogen wird die Überhitzung und die Energiezufuhr in den Grundwerkstoff reduziert, da nur bei negativer Polung und niedrigem Grundstrom der diffuse Lichtbogen brennt, welcher zu der sehr effektiven Energienutzung und Abschmelzung ohne Überhitzung führt. Es handelt sich somit um einen sehr kalten Schweißprozess. Die Tropfenablösung kann dabei in der Grund- oder in der Hochstromphase erfolgen. Auch sind mehrere Impulse pro Tropfenablösung möglich.

Mit Vorteil wird in der Grundstromphase ein Strom zwischen 5 und 50 A, vorzugsweise zwischen 10 und 30 A eingestellt wird. Werden diese, sehr tiefen Werte für den Strom in der Grundstromphase verwendet stellen sich die Vorteile der Erfindung in besondere Weise ein und weiterhin wird die Schmauchbildung unterdrückt. Die Vorteile der Erfindung zeigen sich jedoch auch bei höheren Grundstromwerten.

Mit besonderen Vorteilen wird eine Abschmelzleistung zwischen 7 und 15 kg/h, vorzugsweise zwischen 8 und 11 kg/h verwendet. Das erfindungsgemäße Verfahren macht ein Auftragsschweißen oder/und Auftragslöten mit derart hohen Abschmelzleistungen möglich. Die hohen Abschmelzleistungen ermöglichen hohe Auftragsschweißgeschwindigkeiten oder/und hohe Auftragsraten.

Es wird als Elektrode besonders bevorzugt eine Drahtelektrode mit einem Durchmesser von 0,8 bis 1,6 mm, vorzugsweise von 1,0 bis 1,2 mm verwendet. Mit diesen bevorzugten Drahtdurchmessern werden die hohen Abschmelzleistungen wirkungsvoll unterstützt.

Mit Vorteil werden als Schutzgas Gase oder Gasgemische verwendet werden, die zumindest Argon, Helium, Kohlendioxid, Sauerstoff und/oder Stickstoff enthalten. Die Festlegung des geeignetes Gas beziehungsweise der geeigneten Gasmischung erfolgt in Abhängigkeit von der Schweiß- beziehungsweise Lötaufgabe, insbesondere unter Berücksichtigung von Grund- und Auftragswerkstoff. Es kommen sowohl die Reingase als auch Zwei-, Drei- und Mehr-Komponenten-Gemische zum Einsatz. In vielen Fällen erweisen sich auch dotierte Gasmischungen als besonders vorteilhaft, wobei dotierte Gasmischungen eine Dotierung mit aktiven Gasen im vpm-Bereich aufweisen, d.h. die Dotierung erfolgt im Bereich von weniger als einem Prozent, meist weniger als 0,1 Vol.-%. Als Dotiergas werden aktive Gas, wie beispielsweise Sauerstoff, Kohlendioxid, Stickstoffmonoxid, Lachgas oder Stickstoff verwendet.

Im Schutzgas sind vorteilhafterweise 10 bis 80 Vol.-%, vorzugsweise 20 bis 70 Vol.-%, besonders bevorzugt 30 bis 60 Vol.-% Helium enthalten. Eine Zugabe von Helium ist in vielen Fällen empfehlenswert, da dies die Möglichkeit zu einer gezielten Steuerung der Aufmischung bietet. Auch wird durch eine Heliumzugabe die Nahtgeometrie positiv beeinflusst.

Das erfindungsgemäße Verfahren eignet sich insbesondere, wenn Werkstücke aus Stählen oder Nichteisenmetallen bearbeitet werden. So eignet es sich für alle Stahlsorten inklusive Baustählen, Feinkornbaustählen und nichtrostende Stählen. Ebenso ist eine Anwendung für Nichteisenmetalle wie beispielsweise Aluminium möglich.

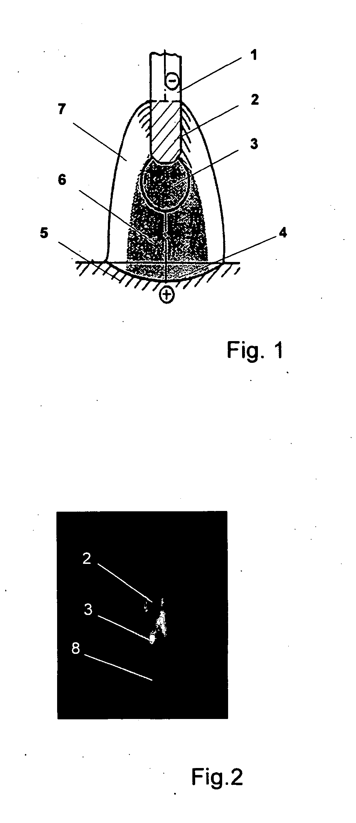

Im Folgenden soll die Erfindung anhand von Figur 1 und 2 in einer beispielhaften Ausgestaltung näher erläutert werden.
- Figur 1: zeigt schematisch die Gestalt des Lichtbogens bei negativer Polung.
- Figur 2: zeigt eine fotographische Aufnahme des diffusen Lichtbogens.

Bei einer negativ Polung der Elektrode, wie sie Fig. 1 zeigt, und positiver Polung des Werkstücks bildet sich ein Lichtbogen folgendermaßen aus: Der Lichtbogen 6, 7 brennt zwischen Elektrode 1 und Werkstück 5. Als Elektrode 1 wird in der Regel eine runde Drahtelektrode verwendet. Ein Materialübergang von Elektrode 1 zum Werkstück 5 findet statt, indem sich von der abschmelzenden Elektrode 1 Tropfen 3 lösen. Der Lichtbogen gliedert sich in einen hellen Kern 6 und einen Halo 7. Der helle Kern 6 hat seinen Ansatzpunkt am Ende der Elektrode 1 und seinen Wärmefleck 4 auf dem Werkstück 5. Der Halo 7 brennt deutlich dunkler als der helle Kern und umgibt den hellen Kern 6 wie ein Lichthof. Der Halo 7 setzt an der Elektrode 1 in Abschlussbereich 2 der Elektrode an. Der Abschlussbereich 2 ist ein größerer Bereich am Ende der Elektrode. Es ist also gleichsam so, dass der Lichtbogen die Elektrode 1 hochklettert oder hochbrennt. Dieser Abschlussbereich 2 umfasst ungefähr eine Länge, die drei- bis fünfmal den Drahtdurchmesser umfasst. Durch das Hochbrennen des Lichtbogens wird der Abschlussbereich 2 erwärmt und erweicht, so dass die dem Schweißprozess zugeführte Energie sehr effektiv in den Materialübergang durch die Ablösung des Tropfens 3 geleitet wird.

In Fig. 2 ist der diffuse Lichtbogen zu sehen, wie er sich in der Grundstromphase zeigt. Bei der Fotografie handelt es sich um eine Hochgeschwindigkeitsaufnahme. Man sieht die Elektrode 1 mit dem sich ablösenden Tropfen 3. Der diffuse Lichtbogen 8 setzt an dem Abschlussbereich 2 der Elektrode an. Er brennt zwischen dem Bereich am Ende der Elektrode 2 und dem Werkstück 5. In der Grundstromphase brennt dieser diffuse Lichtbogen 8, der zur Erwärmung des Drahtes im gesamten Endenbereich führt. Somit führt dieser zu einer effektiven Energiezufuhr in den Schweiß- bezeihungsweise Lötprozess und minimiert die Überhitzung.

### Bezugszeichenliste

- 1: negativ gepolte Elektrode
- 2: Abschlussbereich der Elektrode
- 3: Tropfen, welcher im Begriff ist, sich von der Elektrode zu lösen
- 4: Wärmefleck
- 5: Werkstück aus Grundwerkstoff
- 6: heller Kern des Lichtbogens
- 7: Halo des Lichtbogens (Der Halo ist der Teil des Lichtbogens, welcher deutlich schwächer als der helle Kern brennt und den hellen Kern wie ein Lichthof umgibt.)
- 8: diffuser Lichtbogen

## Patentansprüche

1. Verfahren zum Auftragsschweißen und/oder Auftragslöten mit einem Lichtbogen mit abschmelzender Elektrode, wobei ein Lichtbogen zwischen Elektrode (1) und Werkstück (5) brennt, wobei der Lichtbogen als Impulslichtbogen mit einer Stromkennlinie, die eine periodische Wiederholung mit zumindest einer Grund- und Hochstromphase aufweist, betrieben wird, **dadurch gekennzeichnet, dass** die Elektrode (1) negativ gepolt wird, wobei in der Grundstromphase ein diffuser Lichtbogen (8) zwischen dem Abschlussbereich (2) der Elektrode (1) und dem Werkstück (5) brennt und in der Hochstromphase ein Lichtbogen mit hellem Kern (6) und Halo (7) zwischen Elektrode (1) und Werkstück (5) brennt, wobei der helle Kern (6) des Lichtbogens am Ende der Elektrode (1) ansetzt und der Halo (7) des Lichtbogens den Abschlussbereich (2) der Elektrode (1) umschließt.

2. Verfahren nach Anspruch 1, **dadurch gekennzeichnet, dass** der Abschlussbereich (2) der Elektrode (1) eine Länge aufweist, die das zwei- bis siebenfache, vorzugsweise das drei- bis fünffache des Durchmessers der Elektrode (1) beträgt.

3. Verfahren nach Anspruch 1 oder 2, **dadurch gekennzeichnet, dass** in der Grundstromphase ein Strom zwischen 5 und 50 A, vorzugsweise zwischen 10 und 30 A eingestellt wird.

4. Verfahren nach einem der Ansprüche 1 bis 3, **dadurch gekennzeichnet, dass** eine Abschmelzleistung zwischen 7 und 15 kg/h, vorzugsweise zwischen 8 und 11 kg/h verwendet wird.

5. Verfahren nach einem der Ansprüche 1 bis 4, **dadurch gekennzeichnet, dass** als Elektrode eine Drahtelektrode mit einem Durchmesser von 0,8 bis 1,6 mm, vorzugsweise von 1,0 bis 1,2 mm verwendet wird.

6. Verfahren nach einem der Ansprüche 1 bis 5, **dadurch gekennzeichnet, dass** als Schutzgas Gase oder Gasgemische verwendet werden, die zumindest Argon, Helium, Kohlendioxid, Sauerstoff und/oder Stickstoff enthalten.

7. Verfahren nach Anspruch 6, **dadurch gekennzeichnet, dass** im Schutzgas 10 bis 80 Vol.%, vorzugsweise 20 bis 70 Vol.-%, besonders bevorzugt 30 bis 60 Vol.-% Helium enthalten sind.

8. Verfahren nach einem der Ansprüche 1 bis 7, **dadurch gekennzeichnet, dass** Werkstücke aus Stählen oder Nichteisenmetallen bearbeitet werden.

## Claims

1. Method for build-up welding and/or build-up brazing with an arc with a consumable electrode, an arc being produced between the electrode (1) and the workpiece (5), wherein the arc is operated as a pulsed arc with a current characteristic which has a periodic repetition with at least one background current phase and at least one high current phase, **characterized in that** the electrode (1) has a straight polarity connection, a diffuse arc (8) being produced between the end region (2) of the electrode (1) and the workpiece (5) in the background current phase and an arc with a bright core (6) and a halo (7) being produced between the electrode (1) and the workpiece (5) in the high current phase, wherein the bright core (6) of the arc commences at the end of the electrode (1) and the halo (7) of the arc encloses the end region (2) of the electrode (1).

2. Method according to Claim 1, **characterized in that** the end region (2) of the electrode (1) has a length which is two to seven, preferably three to five, times the diameter of the electrode (1).

3. Method according to Claim 1 or 2, **characterized in that** a current of between 5 and 50 A, preferably between 10 and 30 A, is set in the background current phase.

4. Method according to one of Claims 1 to 3, **characterized in that** a deposition efficiency of between 7 and 15 kg/h, preferably between 8 and 11 kg/h, is used.

5. Method according to one of Claims 1 to 4, **characterized in that** a wire electrode with a diameter of from 0.8 to 1.6 mm, preferably from 1.0 to 1.2 mm, is used as the electrode.

6. Method according to one of Claims 1 to 5, **characterized in that** gases or gas mixtures which contain at least argon, helium, carbon dioxide, oxygen and/or nitrogen are used as shielding gas.

7. Method according to Claim 6, **characterized in that** 10 to 80% by volume, preferably 20 to 70% by volume, particularly preferably 30 to 60% by volume, of helium is contained in the shielding gas.

8. Method according to one of Claims 1 to 7, **characterized in that** workpieces of steels or nonferrous metals are worked.

## Revendications

1. Procédé de soudage à recharge et/ou de brasage à recharge à l'aide d'un arc lumineux et d'électrodes fusibles,
dans lequel un arc lumineux brûle entre l'électrode (1) et la pièce (5),
l'arc lumineux étant conduit en arc lumineux à impulsions dont la ligne caractéristique de courant présente une répétition périodique d'au moins une phase de base et une phase à courant élevé,
**caractérisé en ce que**
l'électrode (1) est raccordée au pôle négatif,
**en ce que** dans la phase de courant de base, un arc lumineux diffus (8) brûle entre la partie terminale (2) de l'électrode (1) et la pièce (5).,
**en ce que** dans la phase à courant élevé, un arc lumineux à noyau brillant (6) et à halo (7) brûle entre l'électrode (1) et la pièce (5) et
**en ce que** le noyau brillant (6) de l'arc lumineux vient se placer à l'extrémité de l'électrode (1) et le halo (7) de l'arc lumineux entoure la partie terminale (2) de l'électrode (1).

2. Procédé selon la revendication 1, **caractérisé en ce que** la longueur de la partie terminale (2) de l'électrode (1) représente deux à sept fois et de préférence trois à cinq fois le diamètre de l'électrode (1).

3. Procédé selon les revendications 1 ou 2, **caractérisé en ce que** dans la phase de courant de base, un courant compris entre 5 et 50 A et de préférence entre 10 et 30 A est réglé.

4. Procédé selon l'une des revendications 1 à 3, **caractérisé en ce qu'**il utilise une puissance de fusion comprise entre 7 et 15 kg/h et de préférence entre 8 et 11 kg/h.

5. Procédé selon l'une des revendications 1 à 4, **caractérisé en ce qu'**il utilise comme électrode une électrode en fil d'un diamètre de 0,8 à 1,6 mm et de préférence de 1,0 à 1,2 mm.

6. Procédé selon l'une des revendications 1 à 5, **caractérisé en ce que** comme gaz de protection, il utilise des gaz ou des mélanges de gaz qui contiennent au moins de l'argon, de l'hélium, du dioxyde de carbone, de l'oxygène et/ou de l'azote.

7. Procédé selon la revendication 6, **caractérisé en ce que** le gaz de protection contient de 10 à 80 % en volume, de préférence de 20 à 70 % en volume et de façon particulièrement préférable de 30 à 60 % en volume d'hélium.

8. Procédé selon l'une des revendications 1 à 7, **caractérisé en ce qu'**il traite des pièces en aciers ou en métaux non ferreux.
